# EUROPÄISCHE PATENTSCHRIFT

(11) **EP 1 561 372 B1**
(45) Veröffentlichungstag und Bekanntmachung des Hinweises auf die Patenterteilung: **28.07.2010**
(21) Anmeldenummer: 05001614.6
(22) Anmeldetag: 27.01.2005
(51) Int. Cl.: A01D 34/82

(54) **Handgeführtes Rasenbearbeitungsgerät**
Hand guided lawn treatment apparatus
Appareil de traitement de gazon guidé manuellement

(30) Priorität: 03.02.2004 DE 102004005235
(43) Veröffentlichungstag der Anmeldung: 10.08.2005
(73) Patentinhaber: Kress, Werner, D-89077 Ulm (DE)
(72) Erfinder: Kress, Werner, 89077 Ulm (DE)
(74) Vertreter: Sawodny, Michael-Wolfgang

(56) Entgegenhaltungen:
- EP-A1- 0 457 433
- EP-A1- 0 742 996
- EP-A2- 0 821 869
- US-A- 2 786 694
- US-A- 5 261 215
- US-A- 5 636 504
- WOLF-GARTEN: 'Kraftvolle Spitzentechnik in zukunftsweisendem Design' HAENDLER KATALOG WOLF 01 Januar 1993, DE, Seiten 1 - 2, XP002991195
- WOLF-GARTEN: 'Sortiment Saison 2002' WOLF-GARTEN KATALOG 01 Januar 2002, DE, Seiten 1 - 2, XP002991196

## Beschreibung

Die Erfindung betrifft ein handgeführtes Rasenbearbeitungsgerät, beispielsweise einen handgeführten Rasenmäher oder einen Vertikutierer, jeweils mit Motorantrieb. Dabei kommt als Motor in erster Linie ein Benzinmotor oder ein Elektromotor in Betracht.

Ein Rasenmäher weist eine Schneideinrichtung auf. Die Schneideinrichtung besteht vorzugsweise aus einem langgestreckten Messerblatt, das in der Mitte seiner Länge um eine vertikale Achse drehbar gelagert ist. Das Messerblatt ist an seinen beiden Längenabschnitten beidseits der genannten Drehachse jeweils mit einer Schneide versehen, der eine Längenabschnitt auf der einen Schmalkante, und der andere Längenabschnitt auf der gegenüberliegenden Schmalkante. Das Messerblatt ist in vielen Fällen im Wesentlichen horizontal angeordnet. Es kann auch eine gewisse Neigung gegen die Horizontalebene aufweisen, so dass die Schneideinrichtung nicht nur ihre Schneid- (oder Abschlag-) Funktion erfüllt, sondern auch eine Förderfunktion. Hierdurch wird ein Luftstrom erzeugt, der das abgeschlagene Gras in eine bestimmte Richtung fördert.

Bevorzugt sind bei einem Rasenbearbeitungsgerät, insbesondere bei einem Rasenmäher Motor und Schneideinrichtung von einem Gehäuse umschlossen. Das Gehäuse kann von einem Fahrgestell getragen sein oder selbst Räder aufweisen, die auf dem Rasen abrollen. Bei einem handgeführten Rasenbearbeitungsgerät ist am Gehäuse ein Holm befestigt, mit dem das Rasenbearbeitungsgerät manipuliert wird. Die Bedienungsperson greift dabei am Holm an, um beispielsweise den Rasenmäher über den Rasen hinweg zu führen und somit dessen Bewegungsbahn zu steuern. Außerdem bringt die Bedienungsperson über den Holm die Schubkraft zum Verfahren des Rasenmähers auf. Es gibt aber auch Rasenmäher, bei denen die genannten Räder einen Antrieb aufweisen, so dass die Bedienungsperson mittels des Holms lediglich noch die Steuerung auszuführen braucht.

Bei einem handgeführten Rasenmäher kann das Gehäuse einen Auslass aufweisen, durch welchen der grasführende Luftstrom austritt. Der Luftstrom kann dabei an einer Seite des Rasenmähers austreten - das heißt seitlich der Bewegungsbahn, die der Rasenmäher ausführt. In neuerer Zeit sind aber Rasenmäher im Allgemeinen mit Grasfangbehältern ausgestattet. Ein solcher Grasfangbehälter hat eine Öffnung, die dem genannten Auslass des Gehäuses entspricht, und die an das Gehäuse über den Gehäuseauslass angeschlossen ist. Der Grasfangbehälter befindet sich meist im hinteren Bereich des Gehäuses.

Der Grasfangbehälter kann einen Sack aus Gewebe oder anderen schlaffen Materialien aufweisen. Er kann aber auch aus einer Box mit starren Wänden bestehen. In jedem Falle ist die Wandung oder wenigstens ein Teil der Wandung des Grasfangbehälters luftdurchlässig. Handelt es sich um ein Gewebe, so ist dies von Natur aus porös. Handelt es sich um eine Box mit starren Wänden, so sind die Wände oder wenigstens einige der Wände perforiert. Bei Rasenmähern gemäß dem Stand der Technik ohne Grasfangbehälter ist der Gehäuseauslass stets mit einer Klappe versehen, die um eine Schwenkachse schwenkbar gelagert ist. Im Betrieb prallt der grasführende Luftstrom gegen die Platte und öffnet diese, so dass der grasführende Luftstrom austreten kann. Ist der Rasenmäher gemäß dem Stand der Technik außer Betrieb, so ist die Klappe geschlossen.

Die Pflege des Gartens spielt im heutigen Leben eine immer größere Rolle. Im Zuge dieser Entwicklung gibt es zusätzlich zu Rasenmähern eine immer größere Anzahl von Bearbeitungs- und Pflegegeräten wie Rasenwalzen, Vertikutiergeräte, Laubsauger und so weiter. Solche Geräte benötigen Stauraum, der zunehmend knapp wird. Aus der DE 35 30 557 ist ein fahrergesteuerter Mäher bekannt geworden, der eine Stoßstange aufweist, die am hinteren Ende des Fahrzeugkörpers angeordnet ist. Diese Stoßstange kann dazu dienen, den Mäher aufrecht aufzustellen.

Aus der US 5,261,215 ist ein Rasenmäher bekannt geworden, der bei abgenommenem Führungsholmen aufstellbar ist.

Die EP 0 457 433 und die EP 0 821 869 zeigen Rasenmäher, bei denen ein Großfangkorb von dem Rasenmähergehäuse umschlossen wird.

Bei handgeführten Rasenbearbeitungsgeräten ist ein solches Aufrechtstellen wegen des Führungsholmes nicht möglich.

Durch den Führungsholm hat jedes handbetätigte Rasenbearbeitungsgerät, insbesondere jeder Rasenmäher eine gewisse Sperrigkeit und beansprucht beim Verstauen sehr viel Raum.

Der Erfindung liegt die Aufgabe zugrunde, ein handgeführtes Rasenbearbeitungsgerät, insbesondere einen handgeführten Rasenmäher, derart zu gestalten, dass er bei geringem konstruktiven Aufwand und ohne nennenswerte Mehrkosten auf möglichst geringem Raum in der betriebsfreien Zeit verstaut werden kann.

Diese Aufgabe wird durch die Merkmale von Anspruch 1 gelöst.

Dem gemäß besteht der Grundgedanke der Erfindung darin, im Bereich der hinteren Stirnwand des Gehäuses des Gerätes wenigstens zwei Auflagerpunkte vorzusehen und den Führungsholm des handgeführten Rasenbearbeitungsgerätes umklappbar auszugestalten, so dass sich der umgeklappte Führungsholm im wesentlichen in Richtung der Gehäuse-Längsachse erstreckt. Mit umgeklapptem Führungsholm ist es dann möglich, das gesamte Gerät in eine stehende Position aufzurichten, so dass es mit den genannten Auflagerpunkten auf einen Fußboden, beispielsweise einen Garagenboden, aufgesetzt werden kann.

Dabei kann man die Auflagerpunkte der hinteren Stirnwand des Gehäuses zuordnen. Dies ist deshalb vorteilhaft, weil die hintere Stirnwand bei stehendem Gerätes mehr oder minder parallel zum Fußboden verläuft und sich somit für das Anbringen von Auflagerpunkten anbietet.

Die Erfindung lässt sich bei Rasenmähern mit Grasfangbehältern insbesondere dann vorteilhaft anwenden, wenn der Grasfangbehälter in das Gehäuse des Rasenmähers integriert ist. Das Gehäuse umschließt dann somit den Motor, die Schneideinrichtung und den Grasfangbehälter. Zum Verstauen des Rasenmähers in stehendem Zustand muss hierbei der Grasfangbehälter nicht erst vom übrigen Rasenmäher entfernt werden, da er ja dessen integraler Bestandteil ist.

Die Auflagepunkte können auch derart angeordnet werden, dass die Längsachse des Rasenmähers in aufgestelltem Zustand gegen die Vertikale leicht geneigt ist. Ist dies der Fall, so kann man nämlich den Rasenmäher derart verstauen, dass er mit seinem oberen Bereich gegen die Wand geneigt ist, so dass er beim Umkippen nicht in den freien Raum vor der Wand fällt. Bei einer derartigen Lagerung sind für eine sichere Lagerung nur zwei Lagerpunkte beispielsweise die Vorderräder eines handgeführten Rasenmähers erforderlich, da die Wand selbst den dritten Lagerpunkt ausbildet.

In einer bevorzugten Ausführungsform der Erfindung ist vorgesehen, dass am Gehäuse des handgeführten Rasenbearbeitungsgerätes eine Anschtagvorrichtung vorgesehen ist, um zu verhindern, dass der um eine Schwenkachse verschwenkbarer Führungsholm über den Anschlag hinaus verschwenkt werden kann.

Um zu verhindern, dass der Führungsholm, wenn er in einer annähernd horizontale Position bis zum Anschlag der Anschlagvorrichtung verschwenkt ist wieder selbstständig zurückklappt, ist vorgesehen, diesen Führungsholm mittels einer Arretiervorrichtung, die am Gehäuse angeordnet ist, zu arretieren.

Die Erfindung ist anhand der Zeichnung näher erläutert. Darin ist im Einzelnen Folgendes dargestellt:
wieder selbstständig zurückklappt, ist vorgesehen, diesen Führungsholm mittels einer Arretiervorrichtung, die am Gehäuse angeordnet ist, zu arretieren.

Die Erfindung ist anhand der Zeichnung näher erläutert. Darin ist im Einzelnen Folgendes dargestellt:
- Figur 1: zeigt einen Rasenmäher in perspektivischer Darstellung in Betriebsposition.
- Figur 2: zeigt denselben Rasenmäher unter einem anderen Blickwinkel.
- Figur 3: zeigt den Rasenmäher in verstauter Position, abgestellt auf die hintere Stirnwand des Gehäuses.
- Figur 4: zeigt den Rasenmäher in Seitenansicht, wiederum in Betriebsposition.
- Figur 5: zeigt den Rasenmäher bei aufgeklappter Gehäuseklappe und herausgehobenem Grasfangbehälter.
- Figur 6: zeigt in schematischer Darstellung einen erfindungsgemäßen Rasenmäher in verstautem Zustand, abgestützt auf der vorderen Stirnfläche und dem Führungsholm.
- Figur 7: zeigt eine Draufsicht auf die hintere Stirnwand des Rasenmähers von Figur 6.

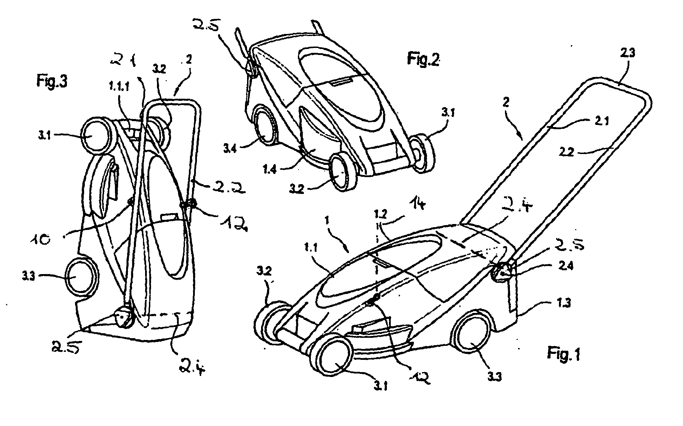

In nachfolgenden Figuren 1 bis 3 ist beispielhaft für ein handgeführtes Rasenbearbeitungsgerät ein Rasenmäher näher dargestellt.

Wie man sieht, umfasst der in den Figuren 1 bis 3 dargestellte Rasenmäher ein Gehäuse 1, einen Führungsholm 2 sowie vier Räder 3.1, 3.2, 3.3 und 3.4.

Das Gehäuse umfasst ein Hauptteil 1.1 sowie eine Klappe 1.2. Klappe 1.2 ist an Hauptteil 1.1 angelenkt, und zwar entlang einer horizontalen Schwenkachse 1.3, die sich an der unteren hinteren Stirnseite des Gehäuses 1 befindet.

Führungsholm 2 umfasst zwei Schenkel 2.1 und 2.2 sowie einen Steg 2.3, der die beiden Schenkel miteinander verbindet. Die beiden Schenkel 2.1 und 2.2 sind an ihren unteren Enden an das Hauptteil 1.1 des Gehäuses 1 angelenkt - siehe Schwenkachse 2.4. Um den Rasenmäher verstauen zu können, ist vorgesehen, den Führungsholm 2 um die Verschwenkachse 2.4 verschwenkbar auszubilden.

Um den Führungsholm in der jeweiligen Position, nämlich in der dargestellten Arbeitsposition in Fig. 2 oder aber auch in der Aufbewahrungsposition wie in Fig. 3 fixieren zu können, sind von Hand betätigbare Schrauben 2.5 am jeweiligen Ende der Schwenkachse vorgesehen. In dem vorliegendem Ausführungsbeispiel muß zum Herumklappen des Führungsholmes 2 in eine annähernd horizontale Position, wie in Fig. 3 gezeigt, die Schrauben 2.5 gelöst werden.

Das Gehäuse umschließt - in der Zeichnung nicht dargestellt - eine Schneideinrichtung mit einem Messer, das um eine vertikale Achse umläuft, ferner einen Motor. Im vorliegenden Falle ist der Motor ein Elektromotor. Möglich wäre auch eine Ausführungsform mit einem Benzinmotor. Der Motor ist oberhalb der Schneideinrichtung und koaxial zu dieser angeordnet. Man erkennt in den Figuren 1 bis 3 eine Ausbeulung 1.4 des Gehäuses 1. Hinter der Ausbeulung 1.4 verbirgt sich die Schneideinrichtung, die vom Motor angetrieben wird.

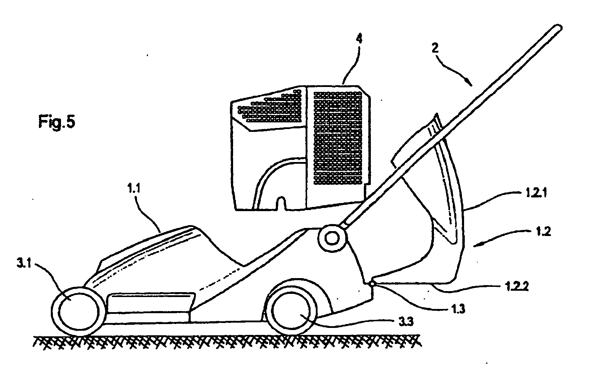

Der Grasfangbehälter befindet sich - in Fahrtrichtung des Rasenmähers gesehen - hinter dem Motor und der Schneideinrichtung, und zwar unter der Gehäuseklappe 1.2. Diesbezüglich wird auf Figur 5 verwiesen.

In Fig. 3 ist der Führungsholm 2 um die Schwenkachse 2.4 nach Lösen der Schrauben 2.5 in eine annähernd horizontale Position, verschwenkt worden. Dies ermöglicht, dass handgeführte Rasenbearbeitungsgerät hier den Rasenmäher auf die mindestens 2 Auflagerpunkte aufzustellen.

In vorliegendem Fall sind die mindestens zwei Auflagerpunkte, auf die das Rasenbearbeitungsgerät aufgestellt wird, eine Vielzahl von Auflagerpunkten, nämlich die Fläche der hinteren Stirnwand.

Wie man aus Figur 3 erkennt, benötigt der stehend verstaute Rasenmäher nur wenig Grundfläche, was bei beengten Raumverhältnissen, zum Beispiel in einer Garage, sehr vorteilhaft ist.

Wie zuvor beschrieben ist bei der gezeigten Ausführungsform der Rasenmäher derart gestaltet, dass er mit der hinteren Stirnwand auf den Boden gestellt werden kann. Die hintere Stirnwand ist im vorliegenden Falle aus der Gehäuseklappe 1.2 gebildet. Alternativ können wie zuvor beschrieben eine endliche Zahl von Auflagerpunkten der Gehäuseklappe 1.2 angeformt sein. Wie beschrieben ist der Führungsholm 2 ist um die Schwenkachse 2.4 hochgeklappt und liegt hierbei in einer senkrechten Ebene oder in einer Ebene, die um wenige Grad, beispielsweise bis zu 20 Grad, gegen die Vertikale geneigt ist. Neben den Auflagerpunkten oder der Stirnwand selbst, die dazu dienen kann, den Rasenmäher stehend aufzustellen, ist es auch möglich, dass in einer alternativen Ausführungsform an die hintere Stirnwand eine Auflagereinrichtung angeformt ist, beispielsweise eine Art "Stoßstange".

Um den Führungsholm 2 in stehender Position in der in Fig. 3 dargestellten Position zu halten, auch wenn die Schraube 2.5 gelöst ist, ist vorgesehen, am Gehäuse 1 einen Anschlag 10 anzuformen. Der Anschlag 10 verhindert ein weiteres Verschwenken des Holmes 2 zu den Rädern 3.1 hin.

Um auch ein Zurückklappen des Führungsholmes 2 zu verhindern, ist in einer besonders vorteilhaften Ausführungsform vorgesehen, am Gehäuse 1 eine Arretiervorrichtung 12 vorzusehen. Ist der Führungsholm 2 nicht verschwenkt, so ist wie in Fig. 1 dargestellt, die Arretiervorrichtung 12 in eine erste Position verbracht. Ist der Führungsholm wie in Fig. 3 dargestellt umgeklappt und liegt am Anschlag 10 an, wird die Arretiervorrichtung 12 um die Achse 14 verschwenkt und übergreift den Führungsholm 2 im Bereich des Schenkels 2.2 und verhindert somit ein herunterklappen.

Wie man aus Figur 3 ferner sieht, ist dem Hauptteil 1.1 des Gehäuses 1 ein Durchgriff 1.1.1 angeformt, was das Handhaben beim Verstauen erleichtert.

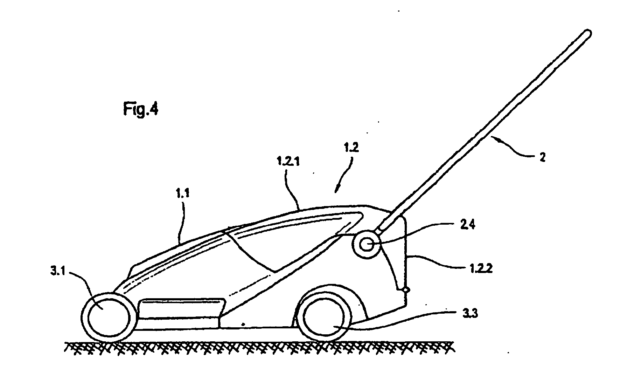

Die Figuren 4 und 5 zeigen den Rasenmäher in schematischer Ansicht von einer Seite her. Man erkennt hieraus genauer die Gestalt der Gehäuseklappe 1.2. Diese weist ein oberes Teil 1.2.1 und ein hinteres Teil 1.2.2 auf. Die äußeren Begrenzungsflächen der beiden genannten Teile verlaufen wenigstens annähernd unter einem rechten Winkel zueinander. Gehäuseklappe 1.2 bildet auch jeweils einen Teil der beiden Gehäuse-Seitenwände. Aus Figur 5 erkennt man auch sehr gut die Schwenkachse 1.3, mittels welcher Gehäuseklappe 1.2 an Hauptteil 1.1 angelenkt ist. Wie man sieht, deckt die Gehäuseklappe 1.2 - in Draufsicht gesehen - den Grasfangbehälter 4 völlig ab. Der Grasfangbehälter 4 ist an seinen Seiten nur vom Gehäuse-Hauptteil 1.1 umschlossen.

Besonders aufschlussreich ist Figur 5. Sie zeigt zusätzlich den Grasfangbehälter 4. Dieser lässt sich nach Umschwenken der Gehäuseklappe 1.2 leicht aus dem Hauptteil 1.1 des Gehäuses 1 nach oben herausheben, so wie dargestellt. Im Unterschied zu Rasenmähern gemäß dem Stand der Technik weist der Auslaß für den grasführenden Luftstrom in einer vorteilhaften Ausführungsform der Erfindung keine schwenkbare Klappe auf, die den Auslaß, wenn der Rasenmäher außer Betrieb gesetzt wird, verschließt. Dies hat den Vorteil, dass der grasführtende Luftstrom eine niedrigere Energie aufweisen kann, da seine Energie nicht mehr zum Öffnen der Klappe benötigt wird. Darüberhinaus wird der Aufbau des Mähers durch den Wegfall der schwenkbaren Klappe am Auslaß für den grasführenden Luftstrom vereinfacht.

In der in Figur 4 gezeigten Betriebsposition des Rasenmähers ist Grasfangkorb 4 in den Innenraum des Gehäuses 1 abgesenkt. Dies ist besonders vorteilhaft da dann die Gehäuseklappe 1.2 in die in Figur 4 dargestellte Position verschwenkt werden kann, die ein Verstauen des Rasenmähers auf der hinteren Gehäuse-Stirnwänden erlaubt.

Wie man aus Figur 5 erkennt, ist es nicht notwendig, zum Herausheben des Grasfangbehälters 4 den Führungsholm 2 zu verschwenken. Dieser bleibt in seiner Betriebsposition.

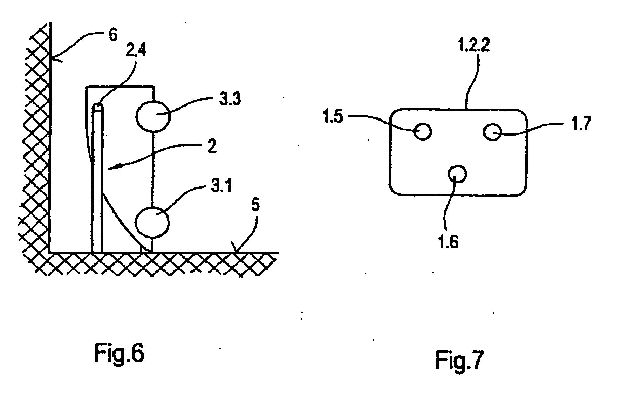

Figur 6 zeigt eine interessante Variante zu Figur 3. Der Rasenmäher befindet sich in seiner verstauten Position, abgestellt auf der Bodenfläche 5 einer Garage nahe einer Wandfläche 6. Die Auflagerpunkte sind hierbei aus der vorderen Stirnwand des Gehäuses 1 gebildet sowie aus dem Führungsholm 2, genauer gesagt aus dessen Steg 2.3. Dabei ist die Länge der beiden Schenkel 2.1, 2.2 des Führungsholms 2 entsprechend zu bemessen, so dass der Rasenmäher in verstautem Zustand senkrecht oder annähernd senkrecht steht. Die hier nicht gezeigte Längsachse des Rasenmähers bildet somit mit der Bodenfläche 5 wenigstens annähernd einen rechten Winkel.

Sowohl dem Steg 2.3 des Führungsholms 2 als auch der vorderen Stirnwand des Gehäuses 1 können entsprechende Auflagerpunkte angeformt sein, beispielsweise Gummipuffer.

Die Vorderräder 3.1 und 3.2 liegen, wie in Figur 6 dargestellt, oberhalb des keilförmig zulaufenden Bereiches der vorderen Stirnwand des Gehäuses. Es ist aber auch denkbar, dass sich diese beiden Vorderräder 3.1, 3.2 weiter vorn am Rasenmäher, und somit in aufgestelltem Zustand weiter unten befinden, so dass die Räder selbst Auflagerflächen bilden. Dies kann einen weiteren Vorteil haben, wie sich aus dem nachfolgend beschriebenen Verstauvorgang ergibt:

Bei dem Rasenmäher, so wie in Figur 4 dargestellt, wird zunächst der Führungsholm 2 in eine wenigstens annähernd horizontale Lage umgeklappt. Sodann wird der Rasenmäher an seinem hinteren Ende ergriffen. Gegebenenfalls befindet sich auch dort eine Griffmulde oder ein Durchgriff. Er wird angehoben und hierbei um die Achse der beiden Vorderräder 3.1, 3.2 verschwenkt. Auf den beiden Vorderrädern ruhend kann er bis zu jener Stelle verfahren werden, an welcher er abgestellt werden soll.

Figur 7 zeigt den hinteren Bereich 1.2.2 der Gehäuseklappe 1.2. Man erkennt drei Auflagerpunkte 1.5, 1.6, 1.7, die der Gehäuseklappe 1.2 angeformt sind. An dieser Stelle sind Gummistöpsel vorgesehen, auf welche der Rasenmäher abgestellt werden kann. Es handelt sich somit um eine Ausführungsform, bei welcher der Benutzer die Wahl hat, den Rasenmäher gemäß Figur 3 oder gemäß Figur 6 abzustellen.

Es versteht sich, dass das Gehäuse aus jeglichem Material bestehen kann. Es wird im Allgemeinen aus Kunststoff bestehen.

Die stehende Aufbewahrung des handgeführten Rasenbearbeitungsgerätes gemäß der Erfindung ist deshalb möglich, weil der Führungsholm 2 verschwenkbar ausgebildet ist. In einer besonders bevorzugten Ausführungsform ist bei einem Rasenmäher dieser derart ausgebildet, dass der Grasfangbehälter vom Gehäuse umschlossen wird. Dies ermöglicht eine Aufbewahrung in stehender Anordnung des Rasenmähers mit Grasfangbehälter wie beschrieben, da der Rasenmäher wie bei Fig. 3 gezeigt auf der hinteren Stirnwand des Gehäuses, das auch den Grasfangbehälter umschließt, aufgestellt werden kann.

Die genannten Auflagerpunkte müssen nicht dem Gehäuse angeformt oder mit diesem fest verbunden sein. Vielmehr kann auch eine getrennte Einrichtung vorgesehen werden, die die Auflagerpunkte enthält, und die an das Gehäuse anschließbar ist, beispielsweise durch Aufstecken oder durch einen Schnappverschluss.

## Patentansprüche

1. Rasenmäher mit einer um eine vertikale Achse umlaufenden Schneideinrichtung;
mit einem Motor;
mit einem Gehäuse (1)
mit einem Führungsholm (2), der am Gehäuse (1) angelenkt ist und zwei Schenkel (2.1, 2.2) sowie einen Steg (2.3) umfasst,
wobei der Führungsholm (2) um eine Schwenkachse (2.4) in eine wenigstens annähernd horizontale Position verschwenkbar ist,
**dadurch gekennzeichnet, dass** im Bereich einer hinteren Stirnwand des Gehäuses (1) wenigstens eine Auflagenfläche vorgesehen ist, die ein Verstauen des handgeführten Rasenbearbeitungsgerätes in stehender Position erlauben und das Gehäuse (1) des Rasenmähers einen Grasfangbehälter (4) umschließt und
das Gehäuse (1) ein Hauptteil (1.1) und eine Klappe (1.2) aufweist, und
dass die Klappe (1.2) derart angeordnet ist, dass der Grasfangbehälter (4) in aufgeklapptem Zustand der Klappe (1.2) nach oben aus dem Gehäuse (1) heraushebbar ist.

2. Rasenmäher nach Anspruch 1, **dadurch gekennzeichnet, dass** die Schenkel (2.1, 2.2) des Führungsholmes einstückig ausgebildet sind.

3. Rasenmäher nach einem der Ansprüche 1 bis 2, **dadurch gekennzeichnet, dass** die Schenkel (2.1, 2.2) des Führungsholmes zweistückig ausgebildet sind.

4. Rasenmäher nach einem der Ansprüche 1 bis 3, **dadurch gekennzeichnet, dass** das Gehäuse den Motor und die Schneideeinrichtung umschließt und - in der Draufsicht - eine langgestreckte Form hat.

5. Rasenmäher nach einem der Ansprüche 1 bis 4, **dadurch gekennzeichnet, dass** der Grasfangbehälter (4) - in Fahrtrichtung des Rasenmähers gesehen - hinter der Schneideinrichtung und dem Motor angeordnet ist.

6. Rasenmäher nach einem der Ansprüche 1 bis 5, **dadurch gekennzeichnet, dass** die Klappe (1.2) mittels einer Schwenkachse (1.3) am Hauptteil (1.1) angelenkt ist.

7. Rasenmäher nach Anspruch 6, **dadurch gekennzeichnet, dass** die Schwenkachse (1.3) wie folgt angeordnet ist:
- an der vorderen Gehäusewand vor dem Grasfangbehälter quer zur Fahrtrichtung, oder
- an der hinteren stirnseitigen Gehäusewand quer zur Fahrtrichtung, oder
- an der oberen Gehäusewand in Fahrtrichtung.

8. Rasenmäher nach einem der Ansprüche 1 bis 7, **dadurch gekennzeichnet, dass** am Gehäuse (1) eine Anschlagvorrichtung (10) für den FOhrungsholm (2) vorgesehen ist.

9. Rasenmäher nach einem der Ansprüche 1 bis 8, **dadurch gekennzeichnet, dass** am Gehäuse (1) eine Arretiervorrichtung (12) für den Führungsholm (2) vorgesehen ist.

10. Rasenmäher nach einem der Ansprüche 1 bis 9, **dadurch gekennzeichnet, dass** das Gehäuse (1) - in Seitenansicht gesehen - wenigstens annähernd keilförmig ist, und dass die obere Abdeckfläche kreisbogenförmig ist.

## Claims

1. A lawnmower, comprising a cutting device rotating about a vertical axis, a motor, a housing (1), a handlebar (2) which is linked to the housing (1) and comprises two legs (2.1, 2.2) and a crosspiece (2.3), with the handlebar (2) being swivellable about a swivel axis (2.4) to an at least approximately horizontal position, **characterized in that** at least one bearing surface is provided in the region of a rear face wall of the housing (1), which bearing surface allows storing the hand-guided lawn treatment device in upright position and the housing (1) of the lawnmower encloses a grass catcher (4) and the housing (1) comprises a main part (1.1) and a flap (1.2), and the flap (1.2) is arranged in such a way that the grass catcher (4) can be lifted upwardly out of the housing when the flap (1.2) is in the opened state.

2. A lawnmower according to claim 1, **characterized in that** the legs (2.1, 2.2) of the handlebar are arranged integrally.

3. A lawnmower according to one of the claims 1 to 2, **characterized in that** the legs (2.1, 2.2) of the handlebar are arranged in two parts.

4. A lawnmower according to one of the claims 1 to 3, **characterized in that** the housing encloses the motor and the cutting device and has an elongated shape from a top view.

5. A lawnmower according to one of the claims 1 to 4, **characterized in that** the grass catcher (4) is arranged behind the cutting device and the motor, as seen in the direction of travel of the lawnmower.

6. A lawnmower according to one of the claims 1 to 5, **characterized in that** the flap (1.2) is linked by means of a swivel axis (1.3) to the main part (1.1).

7. A lawnmower according to claim 6, **characterized in that** the swivel axis (1.3) is arranged as follows:
- on the front housing wall before the grass catcher transversally to the direction of travel, or
- on the rear face-side housing wall transversally to the direction of travel, or
- on the upper housing wall in the direction of travel.

8. A lawnmower according to one of the claims 1 to 7, **characterized in that** a stop apparatus (10) for the handlebar (2) is provided on the housing.

9. A lawnmower according to one of the claims 1 to 8, **characterized in that** a locking apparatus (12) for the handlebar (2) is provided on the housing (1).

10. A lawnmower according to one of the claims 1 to 9, **characterized in that** the housing (1) is at least approximately wedge-shaped when seen in a side view, and the upper cover surface is arc-shaped.

## Revendications

1. Tondeuse à gazon avec un dispositif de coupe tournant autour d'un axe vertical ; avec un moteur ;
avec un capot (1);
avec un mancheron (2) articulé sur le capot (1) et qui comporte deux bras (2.1, 2.2) et une entretoise (2.3),
dans laquelle le mancheron (2) peut pivoter autour d'un axe de pivotement (2.4) dans une position au moins approximativement horizontale,
**caractérisée en ce qu'**il est prévu au niveau d'une paroi d'extrémité arrière du capot (1) au moins une surface d'appui qui permet le rangement de l'appareil de traitement de la pelouse conduit à la main en position verticale et le capot (1) de la tondeuse à gazon renferme un bac de collecte de l'herbe (4) et
le capot (1) présente une partie principale (1.1) et un volet (1.2) et le volet (1.2) est disposé de telle manière que le bac de collecte de l'herbe (4) puisse être soulevé et enlevé du boîtier (1) par le haut quand le volet (1.2) est ouvert.

2. Tondeuse à gazon selon la revendication 1, **caractérisée en ce que** les bras (2.1, 2.2) du mancheron sont construits d'un seul tenant.

3. Tondeuse à gazon selon l'une des revendications 1 à 2, **caractérisée en ce que** les bras (2.1, 2.2) du mancheron sont construits en deux parties.

4. Tondeuse à gazon selon l'une des revendications 1 à 3, **caractérisée en ce que** le capot renferme le moteur et le dispositif de coupe et a une forme allongée en vue de dessus.

5. Tondeuse à gazon selon l'une des revendications 1 à 4, **caractérisée en ce que** le bac de collecte de l'herbe (4) est disposé derrière le dispositif de coupe et le moteur, vu dans le sens de la marche de la tondeuse à gazon.

6. Tondeuse à gazon selon l'une des revendications 1 à 5, **caractérisée en ce que** le volet (1.2) est articulé au moyen d'un axe de pivotement (1.3) sur la partie principale (1.1).

7. Tondeuse à gazon selon la revendication 6, **caractérisée en ce que** l'axe de pivotement (1.3) est disposé de la manière suivante :
- sur la paroi antérieure du capot devant le bac de collecte de l'herbe, perpendiculairement au sens de la marche, ou
- sur la paroi d'extrémité arrière du capot perpendiculairement au sens de la marche, ou
- sur la paroi supérieure du capot dans le sens de la marche.

8. Tondeuse à gazon selon l'une des revendications 1 à 7, **caractérisée en ce qu'**un dispositif de butée (10) est prévu sur le capot (1) pour le mancheron (2).

9. Tondeuse à gazon selon l'une des revendications 1 à 8, **caractérisée en ce qu'**un dispositif de blocage (12) est prévu sur le capot (1) pour le mancheron (2).

10. Tondeuse à gazon selon l'une des revendications 1 à 9, **caractérisée en ce que** le capot (1) est au moins approximativement en forme de coin en vue de côté, et **en ce que** la surface de couverture supérieure est en forme d'arc de cercle.
